# EUROPÄISCHE PATENTSCHRIFT

(11) **EP 0 750 077 B1**
(45) Veröffentlichungstag und Bekanntmachung des Hinweises auf die Patenterteilung: **06.11.2002**
(21) Anmeldenummer: 96104909.5
(22) Anmeldetag: 28.03.1996
(51) Int. Cl.: E04B 1/00, E04B 1/80, B27N 3/00, B27N 1/00

(54) **Dämm- bzw. Isolierschicht**
Insulation layer
Couche d'isolation

(30) Priorität: 28.03.1995 DE 19511291; 11.04.1995 DE 19513752; 21.11.1995 DE 19543357
(43) Veröffentlichungstag der Anmeldung: 27.12.1996
(73) Patentinhaber: DDW AG, 98708 Gehren/Thüringen (DE)
(72) Erfinder: Triem, Rainer, 45891 Gelsenkirchen (DE)
(74) Vertreter: Schmidt, Norbert, Rechtsanwalt

(56) Entgegenhaltungen:
- EP-A- 0 310 198
- BE-A- 630 805
- DE-A- 2 835 928
- DE-A- 4 010 538
- DE-A- 4 131 172
- DE-U- 9 101 694
- FR-A- 2 534 186
- LU-A- 86 315
- US-A- 4 301 198

## Beschreibung

Die Erfindung betrifft eine Dämm- bzw. Isolierschicht, insbesondere für das Baugewerbe. Weiter betrifft die Erfindung ein Verfahren zum Herstellen der Dämm- bzw. Isolierschicht.

### Allgemeiner Stand der Technik

Die Erfindung beruht auf die Herstellung von Baudämmstoffen und Bauisolierungen aus Recyclingholz. Denn eine stoffliche Verwertung von Altholz ließ sich bis heute noch nicht realisieren. Geringe Mengen von ca. 3 - 5 % werden angeblich stofflich verwertet, z.B. in der Spanplattenindustrie. Dort werden von dieser geringen absoluten Menge nur ca. 3 % in der Mittelschicht der Spanplatte stofflich verwertet. Die Restmengen von ca. 97 % von diesem geringen Anteil werden mit hohem, unnützen Heizenergieaufwand und in umweltbelastenden Verbrennungsanlagen verheizt. Um Waldholz mit einem relativ hohen Feuchtigkeitsgehalt, welches zur Spanplattenherstellung benutzt wird, auf eine Restfeuchte von 3 % zu trocknen.

Es kann bei dieser minimalen Menge nicht von einem wirtschaftlichen sowie ökologischen Recycling gesprochen werden, wenn unsere Restwaldflächen der Erde weiter geschlagen werden. Zur Zeit ist die Spanplattenindustrie der größte Abnehmer von Altholz, weil es zur Zeit keine anderen Möglichkeiten gibt. Doch es muß ein höherer stofflicher Anteil von Altholz in der Spanplatte in Zukunft realisiert werden.

Dieser Industriezweig verarbeitet aber nur unbelastetes Altholz. Die restlichen Altholzmengen, wie z.B. kunststoffbeschichtetes oder lackiertes Holz werden in Müllverbrennungsanlagen oder auf Deponien entsorgt. In Zahlen ausgedrückt sind dies ca. 5,5 Mio. to. Altholz/p.a., die bei der Verbrennung eine Menge des schädlichen Treibhausgases CO2 freisetzt. Von den anderen schädlichen Gasen ganz zu schweigen.

Alle diese o.g. Verfahren belasten in unzumutbarem Maße die Umwelt und beschleunigen den Treibhauseffekt, als das zur stofflichen Verwertung zu schützende Verfahren. Der weltweite Waldraubbau ändert unser Klima dramatisch und zwingt zum Anbau schnellwachsender, minderwertiger Dünnhölzer mit zweifelhaften Wert zur Erhaltung unseres Weltklimas und der Ökologie. Riesige Waldflächen auf der Erde werden abgeholzt, um den für die Papierindustrie wichtigen Rohstoff Zellulose zu gewinnen. Des weiteren werden Unmengen von Holz in den Industrieländern in der Möbel- und Bauindustrie verarbeitet. Der Anbau von neuen Hölzern wird nicht schnell genug nachvollzogen, der Nährboden hat keinen Halt mehr und wird durch einsetzenden Regen weggespült. Zurück bleibt eine Mondlandschaft, die nicht mehr rekultiviert werden kann. Resthölzer aus Sägewerken werden zum Teil schon in der Zelluloseindustrie eingesetzt, doch ihr Anteil ist noch viel zu gering.

Zellulose ist in jedem Altholz enthalten und bleibt dies auch auf unbegrenzte Zeit. Doch Altholz wird bei der Zelluloseherstellung nicht berücksichtigt.

Für eine Auflage einer mittleren amerikanischen Tageszeitung fallen 500.000 Bäume.

Die gezielte stoffliche Verwertung von Holzwerkstoffen bzw. Altholz zur Schaffung neuer Produkte ist in der nahen Zukunft unumgänglich, um den weltweiten Waldflächenraubbau einzudämmen.
Wissenschaftler warnen, die Erde ist nur noch einen Grad Celsius von der Klimakatastrophe entfernt. Bei der anhaltenden Produktivität und Energieverschwendung könnte die Temperaturerhöhung in 20 Jahren erreicht sein.
1 to. Altholz erzeugt ca. 2338 kg CO2 bei der Verbrennung, wobei der reale Wert wesentlich höher liegt. Das zu schützende Verfahren erzeugt hingegen nur ca. 450 kg CO2 (bezogen auf den Energieverbrauch) und es entsteht ein neues Produkt, welches sich vielseitig wieder einsetzen läßt. Die CO2 Immission ließe sich durch dieses Verfahren erheblich minimieren.

### Stand der Technik

Dämm- und Isolierplatten sind in der Industrie bekannt. Im Baugewerbe werden sie z.B. eingesetzt bei der Dachisolierung, als Trittschalldämmung, unterhalb von einem Bodenestrich sowie unterhalb von Holzböden und zur Fassadenisolierung. Für ihre Herstellung werden im wesentlichen Primärrohstoffe verwendet. Gerade aber Primärrohstoffe sind besonders kostbar, da unsere Erde nur über ein begrenztes Rohstoffpotenzial verfügt.

So gut wie ungenutzt ist das Potential des Recyclingholzes bzw. des Altholzes. Unbelastete Holzreste werden nicht verwendet, dies gilt erst recht für belastetes Altholz. Belastetes Altholz, wie z.B. kunststoffbeschichtetes oder lackiertes Holz, wird nicht nur nicht einer weiteren sinnvollen Verwendung zugeführt, sondern wird aufwendig in Müllverbrennungsanlagen oder auf Deponien entsorgt. In Zahlen ausgedrückt sind dies ca. 5,5 Millionen Tonnen Altholz/p.a., die bei der Verbrennung eine Menge des schädlichen Treibhausgases CO2 sowie andere schädliche Gase freisetzt.

Es gilt somit: Der Verbrauch von Primärrohstoffen, z.B. Waldholz, muß eingedämmt werden. Die bisher üblichen Verfahren zur Herstellung von Baudämmstoffen belasten in unzumutbarem Maße die Umwelt und beschleunigen den Treibhauseffekt. Der Rohstoff Waldholz muß geschützt werden, betrachtet man den weltweiten Waldraubbau, der zu Klimaänderungen führt und zur Verkarstung der Landschaft. Auch die Aufforstung mit schnellwachsenden minderwertigen Dünnhölzern ist nur eine zweifelhafte Lösung des Problems.

Ein beliebtes Dämmaterial ist z.B. die Spanplatte. Sie wird nicht ausschließlich aus Primärrohstoffen hergestellt, sondern verwertet 3 - 5 % Altholz bzw. Recyclingholz. Tatsächlich aber werden von dieser ohnehin geringen Menge nur wiederum ca. 3 % in der Mittelschicht der Spanplatte verwertet. Der Rest von ca. 97 % wird mit hohem, unnützem Aufwand in Verbrennungsanlagen verheizt, um Primärwaldholz auf eine Restfeuchte von 3 % zu trocknen, um es dann zur Spanplattenherstellung zu benutzen.

Nachteilig in der Spanplattenherstellung ist somit der immer noch sehr hohe Anteil von Primärrohstoff, hier Waldholz. Waldholz aber ist in zunehmendem Maße ein zu schützender und wertvoller Rohstoff. Der weltweite Waldraubbau hat bereits zu dramatischen Klimaveränderungen geführt, sowie zur Verkarstung von riesigen Landstrichen. Nachteilig ist weiter, daß der größte Anteil des bei der Spanplattenherstellung verwendeten Recyclingholzes bzw. Altholzes verbrannt wird und so die Umwelt in einem weiteren Maße stark belastet. Es kommt zu erheblichen Emissionen des schädlichen Treibhausgases CO².

Aus der DE-C-40 10 538 ist ein Verfahren zur Herstellung einer Isolierung für Bauwerke, insbesondere Holzhäuser unter Verwendung von Hobelspänen, bekannt. Die Hobelspäne werden zunächst mit Imprägniermittel befeuchtet, feucht in eine Form oder den zu isolierenden Hohlraum eingebracht, dann verdichtet, dann ausgetrocknet, und zwar auf einen Feuchtigkeitsgehalt unter 20 %. Die so hergestellte Isolierschicht weist keine Hohlräume auf und ist verdichtet. Nachteilig ist, daß es dadurch zu einer Oberflächenverkleinerung kommt, die die Isolierwirkung als solche verringert.

Aus der FR-A-2 534 186 ist ein Bauelement bekannt, bestehend aus einem Stahldrahtgitter über welches eine einhüllende, geschrumpfte Folie gezogen wird. In den Innenraum der Folie ist elastisches Füllmaterial gefüllt. Als Füllmaterial kommt in Frage: Kunststoff- oder Schaumstoffschnitzel, -flocken, -granulat; Gummischnitzel, -flocken oder -granulat; homogener und in der Folie aufgeschäumter Schaumstoff mir oder ohne Füllmaterial, pastöse Kunststoffmischungen, Styropor-Kügelchen, Sägemehl, Korkschrot und dgl. Das Bauelement wird eingesetzt als Liegefläche in einem Bett oder als Unterlage in Polstern von Sitz- und Liegemöbeln bzw. als Bett- und Polstermöbel-Einsatz, deswegen muß es tragfähig und elastisch sein. Es kann auch zur Mauerwerksisolierung eingesetzt werden.

Aufgabe der Erfindung ist es, eine Dämm- bzw. Isolierschicht für das Baugewerbe zu schaffen, welche umweltfreundlich hergestellt werden kann.

Die Aufgabe der Erfindung wird gemäß dem kennzeichnenden Teil von Anspruch 1 gelöst. Gemäß einer bevorzugten Ausgestaltung der Erfindung wird die Aufgabe durch ein Verfahren gelöst, bei dem die Recyclingholzschnitzel in einen Rahmen gegeben und in diesen eingeschweißt werden.

Durch die Verschweißung entsteht eine hervorragende Dämm- und Isolierplatte bzw. Isoliermatte, die auch Umwelteinflüssen standhält. Der erfindungsgemäße Gegenstand besteht - bis auf die Folie - ausschließlich aus umweltfreundlichem bzw. recycelbarem Material. Er benötigt keine teuren Primärrohstoffe. Der Rahmen ist stabil und bietet aufgrund seines Charakters ausreichend Platz zur Aufnahme von Recyclingholzschnitzeln. Er ist schnell und einfach zu befüllen. Er ist besonders prädestiniert als Isolierung zu wirken.

Die Holzschnitzel oder Späne mit oder ohne Zusatzstoffen werden somit zur Herstellung von Dämm- und Isolierplatten oder -matten verwendet. Diese Platten oder Matten haben hervorragende Isolier- und Dämmeigenschaften und sind mit denen in der Industrie bekannten Dämm- und Isolierplatten gleichwertig. Diese neuartigen Dämmund Isolierplatten können im Baugewerbe eingesetzt werden. Besonders bei der Dachisolierung, als Trittschalldämmung, unterhalb von den allgemein in der Industrie bekannten Bodenestrich und unterhalb von Holzböden sowie zur Fassadenisolierungen.

Die erfindungsgemäße Dämm- bzw. Isolierschicht ermöglicht, jede Form von Recyclingholz - auch belastetes Altholz - einer sinnvollen Verwendung zuzuführen, nämlich es als Dämm- bzw. Isolierschicht einzusetzen. Primärrohstoffe werden geschont. Zur Herstellung der Dämm- bzw. Isolierschicht sind keine umweltfeindlichen und rohstoffverbrauchenden Herstellungszwischenschritte, wie Verbrennungsvorgänge, notwendig. Das Recyclingholz wird einfach nur zerkleinert. Für die Zerkleinerung ist es möglich, bekannte Anlagen zur Herstellung von Holzschnitzeln oder Holzspänen einzusetzen und zu nutzen.

Gemäß einer bevorzugten Ausgestaltung der Erfindung bestehen die Recyclingholzschnitzel aus Altholz. Altholz ist ein Abfallprodukt, welches nun ohne weiteres energieverbrauchende Prozesse einer neuen Aufgabe zugeführt werden kann, nämlich als Dämm- bzw. Isolierschicht zu füngieren.

Eine weitere bevorzugte Ausgestaltung der Erfindung sieht vor, daß die Recyclingholzschnitzel aus Waldholz bzw. Möbelholzresten bestehen. Auch bei dem Primärrohstoff Waldholz fallen Resthölzer an; Dies geschieht z. B. bei der Herstellung von Möbeln. Diese Abfallprodukte des reinen Primärrohstoffes Waldholz kann einer sinnvollen Verwendung als Dämm- bzw. Isolierschicht zugeführt werden und muß nicht über umweltbelastende Verfahren entsorgt werden.

Gemäß einer bevorzugten Ausgestaltung der Erfindung bestehen die Recyclingholzschnitzel aus belastetem Altholz, wie z. B. oberflächenbeschichteten Möbelhölzern. Belastendes Altholz ist Holz, z. B. aus der Möbelindustrie, welches mit einer Farb- oder Kunststoffbeschichtung versehen ist. Selbst dieses belastete Holz kann als Isolierschicht eingesetzt werden, z. B. auf einem Betonboden - wo ohnehin eine Estrichschicht oberhalb aufgetragen wird - bzw. überall da, wo die Isolierschicht abgedeckt ist.

Eine bevorzugte Ausgestaltung der Erfindung sieht vor, daß die Recyclingholzschnitzel aus einer Mischung von Altholz und/oder Waldholz und/oder Möbelholz bestehen bzw. aus einer Mischung aus belastetem und unbelastetem Holz. Es können aufwendige Trennungs- und Separierungsvorgänge eingespart werden und das Holz kann so wie es ist bzw. so wie es anfällt, ohne weitere Zwischenschritte verwendet werden.

Eine bevorzugte Ausgestaltung der Erfindung sieht vor, daß die Recyclingholzschnitzel mit Zusatzstoffen vermengt sind, wobei der Zusatzstoff Recyclingkunststoff sein kann. So ist es möglich, die Recyclingholzschnitzel widerstandsfähiger zu machen. Dies kann dann von Bedeutung sein, wenn die Dämm- bzw. Isolierschicht besonderen Belastungen ausgesetzt ist.

Eine besondere Ausgestaltung der Erfindung sieht vor, daß der Rahmen aus zwei Querund zwei Längsstücken besteht. Der Rahmen gewährleistet die Stabilität der Dämmund Isolierplatten. Durch das Rahmengestell erlangt die Isolierplatte eine feste äußere Form und wird stapelbar. Die Isolierplatte kann als fertiges Produkt an den Verwendungsort gebracht werden.

Gemäß einer bevorzugten Ausgestaltung der Erfindung sind die Maße des Rahmens individuell bestimmbar. Zur Herstellung des Rahmens sind nur minimale Mittel notwendig, dies ermöglicht wiederum, sofort auf unterschiedliche Rahmenwünsche reagieren zu können und diese bereitzustellen. So ist es möglich, neben den in der Industrie bekannten Maßen von Dämm- und Isolierplatten kostengünstig auch andere Maße anzubieten.

Eine weitere Ausgestaltung der Erfindung sieht vor, daß der Rahmen zusätzliche Quer- und/oder Längsstreben aufweist. Eine Unterteilung des Rahmens ermöglicht eine zusätzliche Stabilisierung; darüber hinaus werden die eingefüllten Recyclingholzschnitzel in festen Bezirken gehalten und sichern so eine gleichmäßige Befüllung des Rahmens, auch dann, wenn die Platte im senkrechten Zustand verarbeitet wird. Dies ist z. B. im Fassadenbau der Fall.

Eine Ausgestaltung der Erfindung sieht vor, daß der Rahmen mit zusätzlichen Stabilisatoren ausgerüstet ist. Je nach Einsatzort der Dämm- bzw. Isolierschicht kann hier auf besondere Belastungen an dem jeweiligen Einsatzort reagiert werden. Gerade im Fassadenbau kann es notwendig sein, die zu unters verwendeten Platten besonderes zu stabilisieren.

Eine weitere bevorzugte Ausgestaltung der Erfindung sieht vor, daß der Rahmen aus Karton besteht. So wird ein Recyclingmaterial gewählt und dieses nutzbar gemacht. Darüber hinaus ist Karton leicht zu verarbeiten. Seine Bearbeitung benötigt keine zeitaufwendigen oder umweltbelastende Verfahren.

Eine weitere bevorzugte Ausgestaltung der Erfindung sieht vor, daß die Recyclingholzschnitzel in einen Rahmen gegeben und in diesen eingeschweißt werden. Je nach Auftrag und Auftragsort können die Plattenformate und die Ausstattung - mit oder ohne Boden; mit oder ohne zusätzliche Quer- bzw. Längsstreben - hergestellt werden. Die so entstandene Dämm- bzw. Isolierplatte kann direkt am Einsatzort ausgelegt werden. Es ist sichergestellt, daß eine genügende und gleichbleibende Isolierschichtdicke vorhanden ist.

Eine weitere bevorzugte Ausgestaltung der Erfindung sieht vor, daß die Recyclingholzschnitzel in Folie eingeschweißt werden. So lassen sich Recyclingholzschnitzel bequem zum Einsatzort transportieren, die Folie bietet Schutz, falls belastete Holzschnitzel mit dabei sind und sichert eine einfache Befüllung.

Eine weitere bevorzugte Ausgestaltung der Erfindung sieht vor, daß nach der Herstellung und vor dem Ausstreuen bzw. Einfüllen der Schnitzel in die Folie die Schnitzel entgiftet werden. Vorzugsweise erfolgt die Entgiftung in einem geschlossenen Behälter oder Raum durch kurzzeitige thermische Behandlung auf 100°C. Nach dieser thermischen Behandlung sind die Holzschnitzel und/oder Holzspäne entgiftet und können keine schleichenden Ausgasungen mehr bewirken. Dieses Verfahren gewährleistet, daß alle schädlichen Ausgasungen aus den Holzschnitzeln und/oder Holzspänen entfernt sind.

Gemäß einer bevorzugten Ausgestaltung der Erfindung werden die Holzschnitzel ausgegast und getrocknet. Die schädlichen Ausgasungen werden oberhalb des Behälters oder Raumes in separate Gasauffangbehälter abgesaugt oder aufgefangen und entsprechend entsorgt.

Eine weitere Ausgestaltung der Erfindung sieht vor, daß die Behandlung im geschlossenen Raum unter Vakuum vorgenommen wird. So kann die Behandlungszeit des zu reinigenden Stoffes erheblich minimiert werden. Die bei der thermischen Behandlung entstehenden Ausgasungen der Giftstoffe erfolgen bei einem bestimmten Druck und einer bestimmten Temperatur, die durch das Vakuum deutlich reduziert werden kann. Das Vakuum ist wirksamer als eine einfache thermische Behandlung mit 100 ° Celsius.

Gemäß einer bevorzugten Ausgestaltung der Erfindung wird die Entfiftung in einem evakuierten Raum durchgeführt. So ist sichergestellt, daß keine Emissionen entstehen.

Gemäß einer bevorzugten Ausgestaltung der Erfindung sind die Recyclingholzschnitzel oberflächenbehandelt, wobei die Oberflächenbehandlung eine fäulnishemmende Imprägnierung oder aber eine Brandschutzimprägnierung oder aber eine Haut aus Recyclingkunststoff ist. So ist es möglich, auf die unterschiedlichen Einsatzfelder der Dämm- bzw. Isolierschichten zu reagieren und sie auf die besonderen Erfordernisse ihres örtlichen Einsatzes zu präparieren.

Ausführungsbeispiele der Erfindung sind in den Zeichnungen dargestellt, und zwar zeigen:
- Fig. 1:: Eine Ansicht auf eine erfindungsgemäße Dämmschicht mit Rahmen und
- Fig. 2:: einen Querschnitt durch eine erfindungsgemäße Dämmschicht mit Rahmen und
- Fig. 3:: eine Ansicht des Rahmens mit Bodenteil.

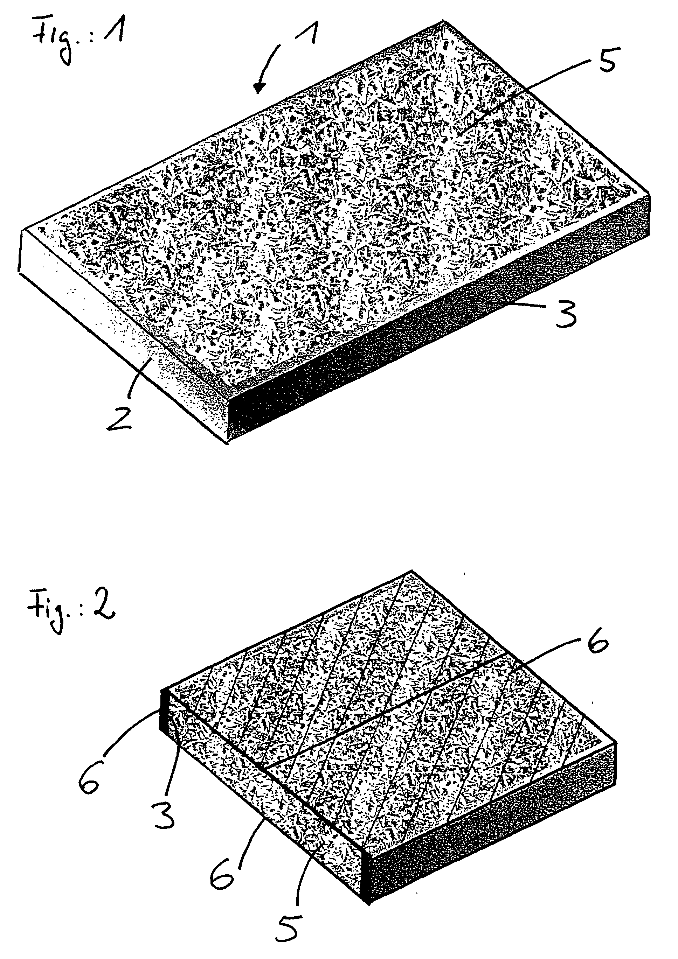

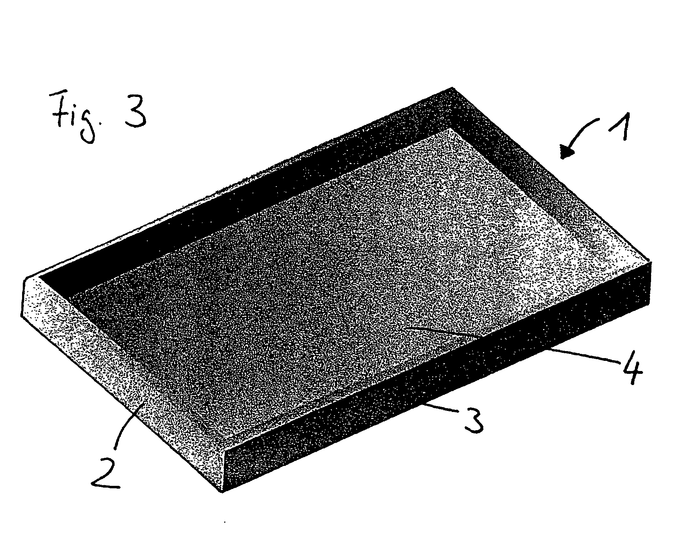

Für die erfindungsgemäße Dämm- bzw. Isolierschicht wird Recyclingholz eingesetzt. Aus dem Recyclingholz werden auf aus der Industrie bekannten Anlagen Holzschnitzel oder Holzspäne 5 verschiedener Größe hergestellt. Die Holzschnitzel oder Holzspäne 5 sind aus Altholz, Waldholz und/oder aus Möbelhölzern mit und ohne Oberflächenbeschichtung, wie z.B. Farb- oder Kunststoffbeschichtung.

Die Recyclingholzspäne 5 werden nun an Ort und Stelle, da wo eine Isolierschicht benötigt wird, ausgeschüttet.

Bei einem Rohbau werden die Holzschnitzel 5 z.B. direkt auf den Betonboden gegeben und darüber wird dann der Bodenestrich aufgetragen. Die Holzschnitzel 5 können auch unterhalb von Holzböden ausgestreut oder bei der Dachisolierung eingesetzt werden. In allen Fällen ergibt sich eine hervorragende Isolier- und Dämmwirkung bzw. Trittschalldämmung.

Die Holzschnitzel können nach ihrer Herstellung auch in eine Folie gegeben und in diese eingeschweißt werden, z.B. mittels einer Schrumpftunnel-Verpackungsmaschine.

Ein weiteres Ausführungsbeispiel gemäß der Erfindung sieht vor, die Recyclingholzschnitzel 5 in einen Grundrahmen 1 zu geben und diese in den Grundrahmen 1 einzuschweißen. Der Grundrahmen muß keinen Boden und Decke besitzen. Der Rahmen kann aus den verschiedensten Materialien hergestellt sein. Vorzugsweise ist der Rahmen 1 aus Karton oder Faserguß. Er besteht aus zwei Querstücken 2 und zwei Längsstücken 3. Die Rahmenabmessungen können individuell - nach Isoliersituation - bestimmt werden.

Vorzugsweise ist in den Rahmen 1 ein Bodenteil 4 eingesetzt. Die Befüllung erfolgt direkt auf das Bodenteil 4. Ist der gesamte Rahmen 1 voll, d.h. der Rahmen 1 ist bis auf die Höhe der Quer- 2 und Längsstücke 3 mit Recyclingholzschnitzeln 5 befüllt, so erfolgt die Verschweißung in die Folie 6. Hierzu können die in der Industrie allgemein bekannten Schrumpftunnel-Verpackungsmaschinen eingesetzt werden.

Zusätzlich kann über das Bodenteil 4 noch ein Deckenteil in den Rahmen 1 angeordnet werden.

Der Rahmen 1 kann mit zusätzlichen Quer- und/oder Längsstreben versehen werden. So entstehen innerhalb des Rahmens 1 Bezirke, die ein Verschieben der Holzschnitzel 5 lediglich im jeweiligen Bezirk erlauben, nicht aber im gesamten Rahmenraum. Dies ist für den Fassadenbau von besonderer Bedeutung, da es möglich sein muß, die Isolierplatten auch senkrecht einzusetzen.

Zusätzliche Stabilatoren können ebenfalls eingebaut werden.

Je nach Einsatzort der Recyclingholzschnitzel 5 können diese auch mit anderen Zusatzstoffen gemischt und/oder vermengt werden, wie z.B. Recyclingkunststoff.

Holzschnitzel, die durch schleichende Ausgasung von Giftstoffen belastet sind, wie z.B. Formaldehyd in Möbelhölzern, werden vor ihrer Weiterverwertung entgiftet. Die Entgiftung erfolgt durch kurzzeitige thermische Erwärmung auf ca. 100 Grad Celsius in einem geschlossenen Behälter oder Raum. Alle schädlichen Ausgasungen werden so aus den Holzschnitzeln und/oder Holzspänen entfernt. Des weiteren erfolgt die Trocknung der Holzschnitzel und/oder Holzspäne. Die schädlichen Ausgasungen werden oberhalb des Behälters oder Raumes in separate Gasauffangbehälter abgesaugt oder abgefangen und entsorgt. So entgiftet können die Holzspäne oder Schnitzel keine schleichenden Ausgasungen mehr bewirken.

Die Entgiftung kann auch in einem geschlossenen Raum mit Hilfe eines Vakuums erfolgen. Dies minimiert die Behandlungszeit des zu reinigenden Stoffes erheblich. Die Ausgasungen der Giftstoffe erfolgen bei einem Druck und einer bestimmten Temperatur, die durch das Vakuum deutlich reduziert werden kann als mit einer einfachen thermischen Behandlung bei 100 Grad Celsius. Durch das zusätzliche Vakuum kann die Behandlungstemperatur gesenkt werden. Der Prozeß wird in einem evakuierten Raum durchgeführt. Es entstehen dadurch keine Emissionen.

Nach der thermischen Behandlung werden die Holzschnitzel oder Holzspäne einer Oberflächenbehandlung unterzogen. Dies können Brandschutzstoffe und/oder fäulnishemmende Imprägnierungen sein. Des weiteren können Recyclingkunststoffe zur Oberflächenbeschichtung der Holzschnitzel und/oder Holzspäne eingesetzt werden.

## Patentansprüche

1. Dämm- bzw. Isolierschicht, insbesondere für das Baugewerbe, die geschüttete und zerkleinerte Recyclingholzschnitzel bzw. Recyclingholzspäne (5), einen Rahmen (1) und eine Folie (6) aufweist, wobei die Recyclingholzschnitzel bzw. Recyclingholzspäne (5) in den Rahmen (1) geschüttet und in diesen mittels der Folie (6) eingeschweißt sind, **dadurch gekennzeichnet, daß** der Rahmen ein Bodenteil (4) und/oder ein Deckelteil aufweist.

2. Dämm- bzw. Isolierschicht nach Anspruch 1, **dadurch gekennzeichnet, daß** die Recyclingholzschnitzel (5) aus Altholz und/oder aus Waldholz und/oder aus Möbelholzresten und/oder aus belastetem Altholz und/oder aus oberflächenbeschichteten Möbelhölzern bestehen.

3. Dämm- bzw. Isolierschicht nach Anspruch 1 oder 2, **dadurch gekennzeichnet, daß** die Recyclingholzschnitzel (5) aus einer Mischung von Altholz und/oder Waldholz und/oder Möbelholz bestehen und/oder aus einer Mischung aus belastetem und unbelastetem Holz.

4. Dämm- bzw. Isolierschicht nach einem der vorhergehenden Ansprüche, **dadurch gekennzeichnet, daß** die Recyclingholzschnitzel (5) mit Zusatzstoffen vermengt sind, z. B. Recyclingkunststoff.

5. Dämm- bzw. Isolierschicht nach Anspruch 1, **dadurch gekennzeichnet, daß** der Rahmen (1) aus zwei Quer-(2) und zwei Längsstücken (3) besteht und die Maße des Rahmens (1) individuell bestimmbar sind.

6. Dämm- bzw. Isolierschicht nach Anspruch 5, **dadurch gekennzeichnet, daß** der Rahmen (1) Stabilatoren aufweist.

7. Damm- bzw. Isolierschicht nach Anspruch 5 oder 6, **dadurch gekennzeichnet, daß** der Rahmen (1) aus Karton oder Faserguß besteht.

8. Verfahren zur Herstellung einer Dämm- bzw. Isolierschicht, insbesondere für das Baugewerbe, bei dem aus Recyclingholz hergestellte Schnitzel zu einer Isolierschicht ausgestreut werden, **dadurch gekennzeichnet, daß** die Recyclingholzschnitzel (5) direkt auf das Bodenteil (4) eines Quer- und Längsstücke (2, 3) und ein Bodenteil (4) aufweisenden Rahmens (1) geschüttet und das Ganze nach dem Befüllen des Rahmens (1) mittels einer Folie (6) eingeschweißt wird.

9. Verfahren nach Anspruch 8, **dadurch gekennzeichnet, daß** nach der Herstellung und vor dem Ausstreuen und/oder vor dem Einfüllen der Schnitzel in die Folie (6), die Schnitzel (5) entgiftet werden.

10. Verfahren nach Anspruch 9, **dadurch gekennzeichnet, daß** die Schnitzel (5) in einem geschlossenen Behälter oder Raum kurzzeitig thermisch und/oder unter Vakuum behandelt werden.

11. Verfahren nach Anspruch 10, **dadurch gekennzeichnet, daß** die Schnitzel (5) in einem geschlossenen Behälter auf 100° C erhitzt und/oder ausgegast und getrocknet werden.

12. Verfahren nach Anspruch 10 oder 11, **dadurch gekennzeichnet, daß** bei der thermischen Behandlung entstehende Ausgasungen oberhalb des Behälters in separate Gasauffangbehälter abgesaugt oder aufgefangen werden.

13. Verfahren nach einem der Ansprüche 9 bis 12, **dadurch gekennzeichnet, daß** die Entgiftung in einem evakuierten Raum durchgeführt wird.

14. Verfahren nach einem der Ansprüche 9 bis 13, **dadurch gekennzeichnet, daß** die Recyclingholzschnitzel (5) vor ihrer Verwendung oberflächenbehandelt werden, und zwar mit einer fäulnishemmenden Imprägnierung und/oder mit einer Brandschutzimprägnierung und/oder mit Recyclingkunststoffen.

## Claims

1. Damming or insulating layer used in particular in the building industry and comprising poured crushed recycling wood chips or recycling wood shavings (5), a frame (1) and a sheet (6), wherein the recycling wood chips or recycling wood shavings (5) are fed into said frame and sealed therein by means of said sheet (6),
**characterized in that**
said frame consists of a bottom part (4) and/or a cover part.

2. Damming or insulating layer as defined by claim 1,
**characterized in that**
said recycling wood chips (5) consist of old wood and/or forest wood and/or wooden furniture remains and/or contaminated old wood and/or surface coated wooden furniture remains.

3. Damming or insulating layer as defined by either of claims 1 or 2,
**characterized in that**
said recycling wood chips (5) consist of a mixture of old wood and/or forest wood and/or wooden furniture remains and/or a mixture of contaminated and non contaminated wood.

4. Damming or insulating layer as defined by either of the preceding claims,
**characterized in that**
said recycling wood chips (5) are blended with additives or recycling synthetic materials, respectively.

5. Damming or insulating layer as defined by claim 1,
**characterized in that**
said frame (1) consists of a pair of transverse sections (2) and a pair of longitudinal sections (3), and that the dimensions of said frame (1) may be individually adjusted.

6. Damming or insulating layer as defined by claim 5,
**characterized in that**
said frame (1) is provided with stabilizers.

7. Damming or insulating layer as defined by either of claims 5 or 6,
**characterized in that**
said frame (1) is made of cardboard or fibre cast material.

8. Method for fabricating a damming or insulating layer used in particular in the building industry, wherein chips made of a recycling wood are poured to form an insulating layer,
**characterized in that**
said recycling wood chips (5) are directly fed onto the bottom part (4) of a frame (1) comprising transverse and longitudinal sections (2, 3) and a bottom part (4) and that after filling said frame (1) the obtained assembly is sealed by means of a sheet (6).

9. Method as defined by claim 8,
**characterized in that**
after the preparation and before feeding and/or filling the chips into said sheet (6), said chips are decontaminated.

10. Method as defined by claim 9,
**characterized in that**
said chips (5) are shortly heat treated and/or vacuum treated in a closed vessel or space.

11. Method as defined by claim 10,
**characterized in that**
said chips (5) are heated and/or degassed and dried in a closed vessel at a temperature of 100° C.

12. Method as defined by either of claims 10 or 11,
**characterized in that**
the gases produced during heat treatment are sucked off or collected above said vessel in separate gas collecting containers.

13. Method as defined by either of claims 9 to 12,
**characterized in that**
said decontamination is carried out in an evacuated space.

14. Method as defined by either of claims 9 to 13,
**characterized in that**
before use the recycling wood chips (5) are surface impregnated with a decomposition inhibiting material and/or a fire preventing material and/or with a synthetic recycling material.

## Revendications

1. Couche calorifugé ou isolante utilisée en particulier dans l'industrie du bâtiment et comprenant des copeaux de bois de recyclage ou des particules de bois de recyclage (5) déversés et concassés, ainsi qu'un cadre (1) et une feuille (6), ces copeaux étant déversés dans ledit cadre (1) et soudés dans ce dernier à l'aide d'une feuille (6),
**caractérisée en ce que**
ledit cadre comprend une section de fond (4) et/ou une section de clôture.

2. Couche calorifuge ou isolante suivant la revendication 1,
**caractérisée en ce que**
les copeaux de bois de recyclage (5) sont préparés à partir de vieux bois et/ou de bois de forêt et/ou de restes de bois de meubles et/ou à partir de restes de bois de meubles dont la surface a été traitée.

3. Couche calorifuge ou isolante suivant l'une des revendications 1 ou 2,
**caractérisée en ce que**
les copeaux de bois de recyclage (5) sont composés d'un mélange de vieux bois et/ou de bois de forêt et/ou de restes de bois de meubles et/ou d'un mélange de bois contanimé ou non contaminé.

4. Couche calorifuge ou isolante suivant l'une des revendications précédentes,
**caractérisée en ce que**
lesdits copeaux de bois de recyclage (5) sont mélangés d'additifs, comme par exemple d' un matériel de recyclage synthétique.

5. Couche calorifuge ou isolante suivant la revendication 1,
**caractérisée en ce que**
le cadre (1) est composé d'une paire de sections traverses (2) et d'une paire de sections longitudinales (3), et **en ce que** les dimensions du cadre (1) sont individuellement réglables.

6. Couche calorifuge ou isolante suivant la revendication 5,
**caractérisée en ce que**
ledit cadre (1) est équipé de stabilisateurs.

7. Couche calorifuge ou isolante suivant l'une des revendications 5 ou 6,
**caractérisée en ce que**
le cadre (1) consiste d'un carton ou d'une matière de fibres coulées.

8. Procédé de fabrication d'une couche calorifuge ou isolante, utilisée en particulier dans l'industrie du bâtiment, dans lequel des copeaux préparés à partir d'un bois de recyclage sont déversés de façon telle à former une couche isolante,
**caractérisé en ce que**
les copeaux de bois de recyclage (5) sont déversés directement sur la partie de fond (4) d'un cadre (1) comprenant des sections traverses et des sections longitudinales (2, 3) et une partie de fond (4) pour former une couche isolante, et **en ce que** après le remplissage du cadre (1) l'ensemble est soudé à l'aide d'une feuille (6).

9. Procédé suivant la revendication 8,
**caractérisé en ce que**
après la fabrication et avant le déversement et/ou avant le remplissage des copeaux dans la feuille (6), ces copeaux (5) sont décontaminés.

10. Procédé suivant la revendication 9,
**caractérisé en ce que**
pour une courte durée ces copeaux (5) sont traités thermiquement et/ou sous vide dans un conteneur ou un espace fermé.

11. Procédé suivant la revendication 10,
**caractérisé en ce que**
ces copeaux (5) sont chauffés et/ou dégazés et séchés dans un conteneur fermé à une température de 100° C.

12. Procédé suivant l'une des revendications 10 ou 11,
**caractérisé en ce que**
les gaz produits lors du traitement thermique sont récupérés et aspirés au-dessus du conteneur dans des réservoirs de récupération de gaz.

13. Procédé suivant l'une des revendications 9 à 12,
**caractérisé en ce que**
ladite décontamination est éffectuée dans un espace évacué.

14. Procédé suivant l'une des revendications 9 à 13,
**caractérisé en ce que**
avant leur utilisation la surface des copeaux de bois de recyclage (5) est traitée, comme par exemple à l'aide d'une imprégnation empêchant la pourriture et/ou à l'aide d'une imprégnation anti-feu et/ou à l'aide de matières synthétiques de recyclage.
